Europäisches Patentamt

European Patent Office

Office européen des brevets

(19)

(11) Publication number: **0 192 485 B1**

# EUROPEAN PATENT SPECIFICATION

(12)

(45) Date of publication of patent specification: **17.07.91**   (51) Int. Cl.⁵: **C09C 1/36, G03G 9/08**

(21) Application number: **86301220.9**

(22) Date of filing: **20.02.86**

(54) Titanium dioxide particles, and process for preparing the same.

(30) Priority: **20.02.85 IT 1957885**

(43) Date of publication of application:
**27.08.86 Bulletin 86/35**

(45) Publication of the grant of the patent:
**17.07.91 Bulletin 91/29**

(84) Designated Contracting States:
**BE DE FR GB IT NL SE**

(56) References cited:
**BE-A- 439 907        DE-A- 1 467 482**
**FR-A- 790 190        FR-A- 1 577 555**
**FR-A- 2 089 098      US-A- 3 115 470**
**US-A- 4 177 253**

(73) Proprietor: **Montedison S.p.A.**
**31, Foro Buonaparte**
**I-20121 Milan(IT)**

(72) Inventor: **Matijevic, Egon**
**94, Market Street**
**Potsdam New York 13676(US)**
Inventor: **Gherardi, Paola**
**14, Via Visentin**
**I-28100 Novara(IT)**

(74) Representative: **Whalley, Kevin et al**
**MARKS & CLERK 57/60 Lincoln's Inn Fields**
**London WC2A 3LS(GB)**

EP 0 192 485 B1

Rank Xerox (UK) Business Services

**Description**

This invention related to titanium dioxide particles, and in particular to solid, non-aggregated particles of titanium dioxide coated with iron oxides, and to a process for preparing such particles.

More particularly, the invention relates to spherical titanium dioxide particles having a low polydispersion index, as defined hereinafter, and sizes below one micron or at maximum a few microns.

It is known that titanium dioxide can be prepared in the form of spherical, non-aggregated, monodispersed or polydispersed particles having a low polydispersion index, the sizes of such particles ranging from 0.05 to about 3 $\mu$m.

U.S.-A-4,241,042 describes such titanium dioxide spherical particles and a method of preparing the same. As is well known, titanium dioxide having the above-mentioned characteristics exhibits improved properties in all the fields of use in which this oxide is employed.

In particular, if the polydispersion index is not greater than 1.2, the properties of the titanium dioxide pigments are improved as regards the purity of the colour and the optical characteristics.

The titanium dioxide having the above-mentioned characteristics is utilizable as a catalyst since, if it consists of very small particles, it has a very great specific surface area and, as a consequence, a higher catalytic activity.

When titanium dioxide is utilized for preparing coloured pigments, it is mechanically or chemically mixed with various substances, in particular oxides, which impart the colour.

The pigmentary properties of the mixtures depend on the particle size of the added coloured oxides.

These mixtures, however, do not retain the superior pigmentary qualities exhibited by the titanium dioxide as such, as the pigment appears non-homogeneous, thus giving rise to colour variations within the coated area.

The overall balance of the properties of these mixtures generally results in a loss of the improvements which were intrinsic to the titanium dioxide having the characteristics described in the above-mentioned U.S.-A-4,241,042.

Iron oxides in the form of spherical, non-aggregated, sub-micronic particles are also known. In this case, however, if coloured pigments exhibiting colour shades other than those of the starting iron oxide are to be obtained, it is necessary to mix them with white pigments, generally with titanium dioxide. The mechanical or chemical mixtures of the described oxides give rise to the same drawbacks mentioned before, in particular non-homogeneity and lower colour intensity phenomena due to the low homogeneity of the mixtures. An attempt at improving the uniformity of the mixtures by carrying out very fine grindings leads to a disgregation of the uniform spherical particles of the oxides employed as precursors with consequent loss of all the desirable characteristics which are due to the morphology of the starting particles.

The non-homogeneities of the pigment occur even if various oxides having nearly the same morphological and granulometric characteristics are mixed together. In the case of mechanical mixtures, furthermore, the products contain impurities deriving from the mechanical means utilized to carry out the mixing.

For applications in the diagnostic field or as toners, there are required materials - even if not thoroughly magnetic - having however a homogeneous surface coating made of magnetic material, as even such a small superficial amount is sufficient for such purposes. In fact, mechanical mixtures of the oxides exhibit non-homogeneity phenomena which render them practically not utilizable for such uses.

FR-A-2 089 098 discloses a process for preparing powders consisting of a porous support such as $TiO_2$ charged with a ferromagnetic compound, which comprises precipitating Fe-Co mixed hydroxides. In that case, however, no homogeneous coating on the support is obtained.

The present invention makes it possible to overcome the above-mentioned drawbacks and provides spherical, non-aggregated particles having a narrow size distribution, which can be utilized in the pigmentary field in order to obtain differently coloured pigments and which, if subjected to particular treatments, permit particles to be obtained consisting of an inert core coated with a magnetic material, which can be utilized in the diagnostic field or as a toner for photostatic reproductions.

With the spherical particles of the present invention it is possible to obtain systems which combine the properties of the titanium dioxide consisting of spherical particles having a narrow size distribution with the properties of the supported oxides, which leads to a considerable increase in the magnetic and pigmentary properties as compared with those obtained in the prior art by using mixtures of the abovesaid oxides.

It has surprisingly been found that it is possible to prepare titanium dioxide coated with an iron oxide layer which retains the same granulometric and morphological characteristics of the titanium dioxide used as a support.

The present invention provides spherical non-aggregated particles having a number average diameter of from 0.05 to 3.04 $\mu$m, a polydispersion index dw/dn less than or equal to 2.0, in which dw is the weight

2

average diameter and dn is the number average diameter, consisting of titanium dioxide coated with a uniform layer having a thickness from 10Å to 400 Å and consisting of $\alpha$- or $\gamma$- $Fe_2O_3$, or magnetite or mixture thereof.

For applications in the pigmentary field, spherical particles of the invention having a polydispersion index less than or equal to 1.20 and a diameter of from 0.2 to 0.8 $\mu$m are preferably used.

The term "monodispersed particles", whenever used herein, means particles having a polydispersion index dw/dn less than or equal to 1.20.

The surface layer may vary from Å to 400 Å, preferably from 10 to 300 Å. The average dimensions (dw and dn) as well as the morphological and granulometric characteristics are determined under the electron microscope by means of the transmission technique (TEM). The method of determining dw and dn is described by E.A. Collins, J.A. Davidson and C.A. Daniels in "Review of Common Methods of Particle Size Measurement", Journal of Paint Technology, vol. 47, No. 604, May 1975.

The titanium dioxide utilized can be in the form of crystalline anatase, or rutile, or mixtures thereof, as is described in U.S. 4,241,042.

The determination of the crystalline phase of titanium dioxide, of $\alpha$- or $\gamma$- $Fe_2O_3$ and of magnetite is carried out by the X-ray powder diffraction spectrum method according to the methods listed hereinbelow:

| | |
|---|---|
| for $\alpha$- $Fe_2O_3$ | method J.C.P.D.S. No.33-664 |
| for $\gamma$- $Fe_2O_3$ | method J.C.P.D.S. No.25-1402 |
| for magnetite | method J.C.P.D.S. No.19-629 |
| for $TiO_2$ (anatase) | method J.C.P.D.S. No.21-1272 |

The thickness of the iron oxide surface layer deposited onto the $TiO_2$ and its uniformity are measured by the Auger technique accompanied by an ionic bombardment, by operating under the following conditions. A sample of the powder of the invention is introduced into an Auger spectrometer, the device being subjected to such conditions as to obtain an Auger spectrum of the sample surface. An ionic cannon is then started in order to hit the same sample area with a beam of positive Argon ions such as to cause the erosion of the sample. During the ionic bombardment various Auger spectra are drawn, by means of which a curve of the intensities (heights) of the Auger peaks in the spectrum versus the bombardment time is plotted.

Once the composition profile has been so obtained, it is possible to substitute the time variable in the abscissa with the erosion depth by means of a proper calibration and operating under the same test conditions on a layer having a known thickness. The thickness of the surface layer corresponds to the point, measured at the half height, of a variable (height of an Auger peak), which increases (or decreases) as a function of the thickness, between two stable starting and ending levels.

This technique is described in general in "Practical Surface Analysis" ed. by David Briggs M.P. Seah, CH.4.

It has been furthermore surprisingly found that the particles of titanium dioxide coated with $\alpha$-$Fe_2O_3$ can be subjected to treatments in order to transform $\alpha$-$Fe_2O_3$ into an oxide having magnetic characteristics, while still retaining the above-mentioned morphological and granulometric characteristics.

By subjecting to reduction, according to conventional techniques, the oxide coated with $\alpha$-$Fe_2O_3$ at a temperature of about 400°C, in particular ranging from 300 to 500°C, in a hydrogen stream diluted with inert gas, containing water vapour and carbon monoxide, titanium dioxide coated by a magnetite layer may be obtained.

By subjecting the magnetite-coated titanium dioxide to a subsequent oxidation, suitably at about 350°C, titanium dioxide coated with $\gamma$-$Fe_2O_3$ may be obtained. Generally, oxidation is accomplished according to conventional methods at temperatures of the order of 300 to 400°C during a few hours.

The magnetic characteristics of the $TiO_2$ powders coated with magnetite $Fe_3O_4$ or $\gamma$-$Fe_2O_3$ have been measured by a vibrating sample magnetometer produced by Varian. The measured magnitudes are:
- Hci in Oersted (intrinsic Coercivity), the necessary field to reduce magnetization $M_s$ to zero;
- $\sigma_s$ (emu/g) saturation magnetization: it is an intrinsic parameter for each material and can be calculated by the formula: $\sigma_s = M_s/\rho$ where $\rho$ is the material density and $M_s$ is the saturation magnetization which is obtained when the material is saturated with a magnetic field of 18 KGauss.

$\sigma_s$ is influenced by the material purity, while Hci is the magnetic force required to demagnetize the material. The higher the Hci value, the better the magnetic characteristics of the material.

$\sigma_s$ in the present invention cannot be correlated to the theoretical $\sigma_s$ as the material is not pure but contains a core of $TiO_2$.

The $\sigma_s$ values are then compared with the values obtained for mechanical or chemical mixtures of $TiO_2$ and $\sigma\text{-}Fe_2O_3$ subjected to treatments suitable to transform $\sigma\text{-}Fe_2O_3$ into $\gamma\text{-}Fe_2O_3$ and/or magnetite, as described hereinbefore.

The Hci values of the titanium oxides coated with magnetite in accordance with the present invention are surprisingly higher than those of the mechanical mixtures, because $TiO_2$ probably exerts a certain influence on the growth of the crystalline structure of $\sigma\text{-}Fe_2O_3$, and subsequently on the growth of the magnetite obtained by reduction, as explained above.

In fact, the Hci depends on the shape of the particles (shape anisotropy) and on the structure of the magnetic material (magnetocrystalline anisotropy), as it is an extrinsic property.

The unexpected variation of Hci could be explained by the fact that a few particles of iron oxide in the mechanical mixture exhibit lower diameters than the critical one, as a result of which the material would be superparamagnetic.

The value of $\sigma_s$ of the mixture, extremely low with respect to the products of the invention, is surprising and could be explained by the fact that the oxide mixtures are mostly non-homogeneous. From a practical viewpoint, however, the characteristics of the mixtures utilized for photostatic reproduction systems (toner) are not constant, which remarkably limits the use thereof. The magnetic oxides of the invention, conversely, are utilizable for such application.

Furthermore, the products of the invention, since they consist of particles which are all homogeneously coated with magnetic material, are employable also for diagnostic uses, as the particles can be obtained also in a monodispersed form and with sizes far below one micron.

In such a case, the specific adsorption capability, for example of enzymes, is extremely high.

The Hci values of the titanium dioxide coated with $\gamma\text{-}Fe_2O_3$ are lower than those of titanium dioxide coated with magnetite, since in the case of $\gamma\text{-}Fe_2O_3$ the magnetic values depend on the needle-like shape of the particles, such shape being probably not obtained in the presence of $TiO_2$. However, also in this case, the $TiO_2$ particles coated with $\gamma\text{-}Fe_2O_3$ or mixtures thereof with magnetite can be utilized for diagnostic purposes or as toners.

The spherical particles of the present invention are suitably prepared from Fe(III) solutions in the presence of spherical, non-aggregated particles, monodispersed or polydispersed with a polydispersion index less than or equal to 2.0, provided the amount of Fe (III) with respect to $TiO_2$ is less than or equal to 40% by weight and the pH of the suspension is in the range from 1.0 to 2.8, extremes excluded, by heating the suspension to a temperature (T) of from 80 to 100° C and by aging the suspension at said temperature for at least 30 minutes.

Specifically, the invention in another aspect provides a process for preparing spherical particles according to the invention, wherein an iron oxide is caused to precipitate from solution of a Fe(III) salt onto titanium dioxide, consisting of solid, non-aggregated particles having a number average diameter of from 0.05 to 3 $\mu m$ and a polydispersion index dw/dn less than or equal to 2.0, in which dw and dn are as hereinbefore defined, the said particles having a spherical form, by using an amount of Fe (III) less than or equal to 40% by weight calculated on the basis of $TiO_2$, the pH value of the suspension being from greater than 1.0 to less than 2.8, and by subsequently heating the suspension to a temperature of from 80 to 100° C and by aging the suspension at said temperature for at least 30 minutes.

In particular it is preferable to operate at pH values from 1.6 to 2.0 and at concentrations of Fe (III) referred to $TiO_2$ of less than or equal to 30% by weight.

Preferably the process of the invention is operated at temperatures from 90 to 100° C and for aimes of 20 hours, and the time during which the precipitation occurs is preferably at least 30 hours.

It is possible to operate at atmospheric pressure or at higher pressures; in the latter case the time required to cause the iron oxides to deposit onto $TiO_2$ decreases. The salts of Fe(III) which can be utilized are preferably selected from sulphates, chlorides, perchlorates and nitrates. It is particularly preferred when $FeCl_3$ solutions are used and the pH is brought to the desired value with HCl or $HClO_4$.

The titanium dioxide utilized in the present invention can be in the crystalline forms anatase, rutile or mixtures thereof. The titanium dioxide may be prepared according to known methods, such as for example those described in U.S. 4,241,042 or in European Patent Application EP-A-117,755.

It is possible to operate without stirring or with a slow stirring in order to promote the dispersion of the $TiO_2$ particles in the solution.

Furthermore it has been found that it is possible to improve the regularity of the coating layer of the

EP 0 192 485 B1

oxides if the TiO2 particles are treated in an aqueous solution with one or more heteropolyacids under pH conditions at which the coating is to be carried out, and by successively washing the TiO2 particles in order to remove the excess of heteropolyacids and then by operating under the mentioned precipitation conditions.

The heteropolyacids which can be employed are preferably $H_7PW_{12}O_{42}$ (tungstophosphoric acid) and $H_4SiW_{12}O_{40}$ (tungstosilicic acid); the heteropolyacid concentration is preferably from $10^{-5}$ to $10^{-4}$ moles/1.

The titanium oxides coated with the iron oxides in accordance with the present invention are utilizable also as pigments having superior properties with respect to those obtained by mechanically mixing $\alpha$-$Fe_2O_3$ or $\gamma$-$Fe_2O_3$, or magnetite or mixtures thereof with TiO2, also if TiO2 is in the monodispersed or polydispersed form, as already hereinbefore described.

The TiO2 oxides coated with $\alpha$-$Fe_2O_3$ in accordance with the invention exhibit, when they are utilized as pigments, a higher homogeneity, a low permeability to gases, no colour change due to exposure to light, and a good brightness.

Such pigmentary films, moreover, retain these characteristics over long periods of time and do not exhibit peeling off phenomena, i.e. the surface layer of the iron oxide does not detach from the supporting particles.

The hiding power of the particles according to the invention is higher and the colour is improved as compared with mere mixtures of the oxide components thereof.

The TiO2 oxides having the characteristics indicated hereinabove, when they are coated with a magnetic layer of $Fe_3O_4$, are useful as toners or in the diagnostic field, as already explained.

The particles of the invention, based on TiO2 and coated with $\alpha$-$Fe_2O_3$ can be further subjected to doping treatments by Co, Ni, Cr oxides in order to improve the magnetic properties of the product in a subsequent magnetization step. The amounts of the metal oxides utilized as doping agents can generally vary from 0.05 to 10% by weight calculated as metal with respect to the amounts of Fe supported on TiO2. Doping is preferably carried out by treating the particles of the invention, which are already preformed, with solutions of Co, Ni or Cr salts, operating at temperatures from 50° to 100°C for a time of a few hours, and at basic pH values of the order of 8.

After the doping step the product retains the morphological and granulometric characteristics of the coated oxides according to the present invention.

The invention will be further described with reference to the following illustrative Examples.

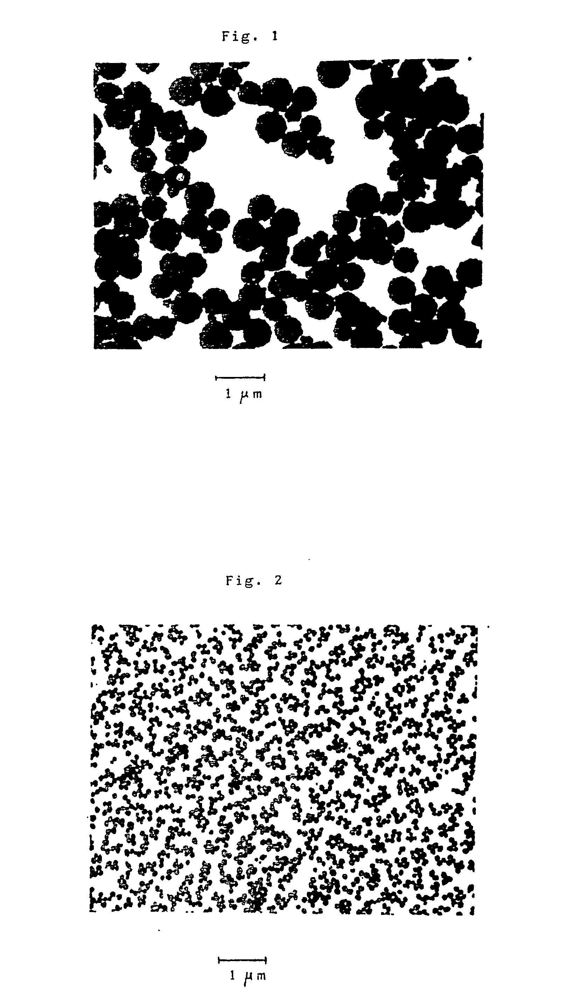

In the following description reference will be made to the accompanying drawings, wherein Figures 1 to 5 are TEM micrographs of the products of Examples 1, 1A, 2, 5 and 6 respectively.

Preparation of standard solutions

A : 1 g of TiO2 powder ($\emptyset$ - 0.44 $\mu$m: dw/dn = 1.12) in the anatase crystallographic form was suspended, by ultrasonication, in 1,000 cc of bidistilled $H_2O$ filtered on a Nuclepore filter 0.2 $\mu$m. The suspension was allowed to rest during a time varying from 2 to 15 days in order to allow the TiO2 to become hydrated.

B : 580 g of anhydrous $FeCl_3$ (min.title 99% by weight) were dissolved in 1,000 cc of bidistilled $H_2O$ filtered on a Nuclepore filter 0.2 $\mu$m, thus obtaining a solution stable to hydrolysis during a long time owing to the high acidity.

Example 1

1 cc of suspension A was transferred, after homogenization by ultrasonication, into a test tube, and was additioned with 1.5 cc of 0.2 M HCl and 0.42 cc of a solution prepared by diluting 1 cc of solution B to 250 cc with bidistilled water filtered on a Nuclepore filter 0.2 $\mu$m.

The final volume of the suspension was brought to 30 cc with bidistilled $H_2O$ (pH = 1.95) and, without stirring, the suspension (in the test tube closed by a screw plug) was maintained at a temperature of 100°C during 24 hours. The TEM analysis of the product is shown in Figure 1. The TiO2 was found to be coated by a uniform a-$Fe_2O_3$ layer about 350 Å thick. Analysis of the product, carried out by X-ray diffraction of the powders, revealed that the iron oxide precipitated as $\alpha$-$Fe_2O_3$ according to standard J.C.P.D.S. No. 33-664.

Example 1 A (comparative test)

There was carried out the same procedure as described in Example 1, but without addition of TiO2. The TEM analysis of the product is shown in Figure 2, from which it is apparent that in these operating

5

conditions the iron oxide precipitated. A comparison between Example 1 and Example 1 A reveals that in Example 1 all the iron oxide precipitates onto the $TiO_2$ surface.

Examples 2, 3, 4 (comparative tests)

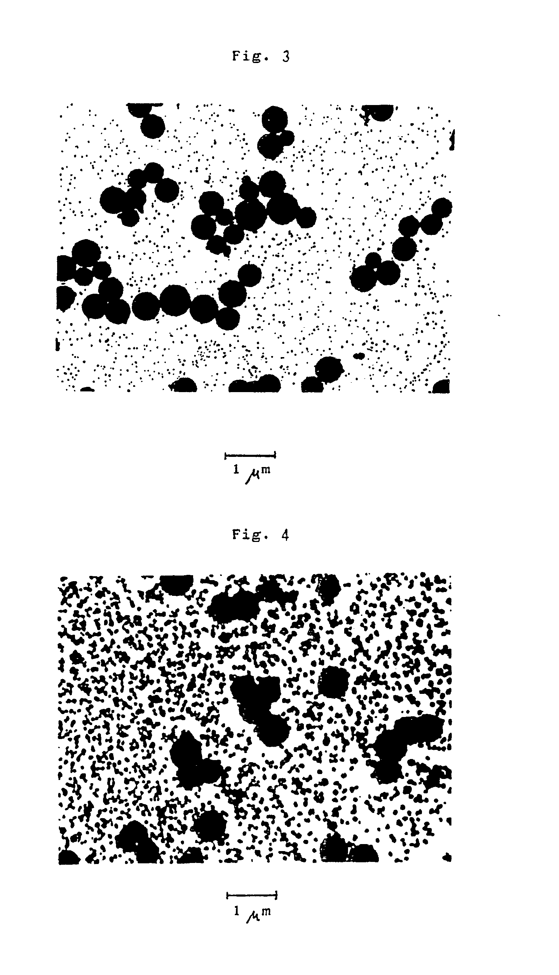

There was followed the procedure as described in Example 1, but using, respectively, 1.5 cc of HCl $2.10^{-3}$ M, 1.5 cc of HCl $2.10^{-2}$ M and 3.0 cc of HCl I M and maintaining the total final volume of the suspension equal to 30 cc. The micrographies by means of TEM show that lower or higher amounts of acid with respect to Example 1 caused, respectively, a precipitation of the iron oxide (Examples 2 and 3) in solution and non-precipitation of the oxide (Example 4). A TEM micrography of Example 2 is shown in Figure 3.

Example 5 (comparative test)

Example 1 was repeated, but using 4.2 cc of $FeCl_3$ solution obtained by diluting 1 cc of solution B to 250 cc with bidistilled $H_2O$ filtered on Nuclepore filter 0.2 $\mu$m. A TEM micrograph of the product obtained is shown in Figure 4, from which it is apparent that complete surface precipitation was not obtained since the presence of an excess of $\alpha$-$Fe_2O_3$ can be observed.

Example 6 (comparative test)

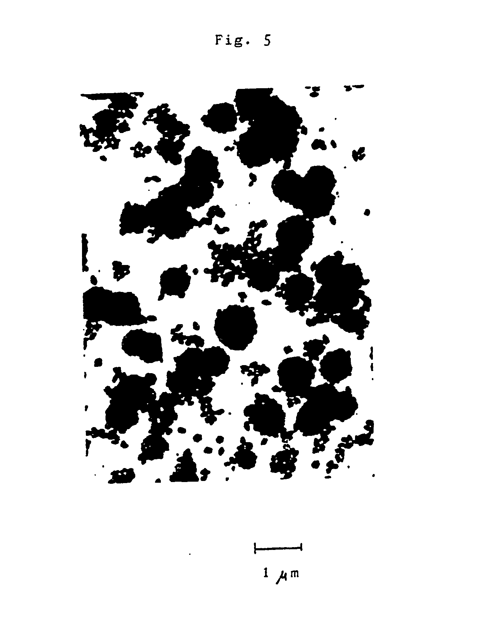

Example 5 was repeated, but using 2.5 cc of HCl 0.2 M. A TEM micrograph of the product obtained is shown in Figure 5. It is noted that there was an increase in the surface precipitation; the polydispersion, however, was higher than 2.0 and aggregates were present.

Example 7

Example 6 was repeated, using 15 cc of suspension A and maintaining all the other parameters unaltered. The final total volume was maintained at 30 cc and the results obtained were similar to those shown in Figure 1. The percentage by weight of Fe (III) on $TiO_2$ was 20% and the thickness, measured by Auger analysis, was equal to 250 Å.

A sample prepared according to the procedure of Example 7 was subdivided into various fractions: in each fraction the pH was changed by addition of a NaOH solution in order to plot the electrophoretic mobility curve of the sample. The curve shows that the surface electric behaviour of the sample was identical with that of a sol of $\alpha$-$Fe_2O_3$ prepared according to Example 6, not using $TiO_2$.

The isoelectric point was obtained at a pH = 7.2 both for the sample of Example 7 and for the comparative sol of $\alpha$-$Fe_2O_3$ indicated hereinbefore.

Example 8 (comparative test)

Example 1 was repeated, carrying out a forced hydrolysis at a temperature of 75° C during 24 hours. TEM micrographies showed that $\alpha$-$Fe_2O_3$ did not homogeneously deposit onto the $TiO_2$ particles. The same test, repeated during a time of 7 days gave the same result and the particles lost their spherical characteristic.

Example 9 (comparative test)

Example 7 was repeated, using, instead of $TiO_2$, 15 cc of a suspension prepared by dispersion (through ultrasonication) of 1 g of $\gamma$-$Al_2O_3$ ($\varnothing$ = 0.25 $\mu$m; dw/dn - 1.18) in 1,000 cc of bidistilled $H_2O$ filtered on Nuclepore 0.2 $\mu$m, and maintaining all the remaining parameters unchanged. $\gamma$-$Al_2O_3$ was prepared as follows.

10 g of $Al_2O_3.3H_2O$ having dn = 0.32 $\mu$m, a polydispersion index dw/dn = 1.17, in a spherical, non-aggregated form, was obtained via an aerosol, according to Example 1 of EP-A-117,755, but changing the following conditions:

the dry $N_2$ flowrate, at a temperature of 158° C, was 200 l/h, the gas carried 7.4 g/h of aluminium sec.butoxide; the second gas stream consisted of dry $N_2$ at a temperature of 0° C at a flowrate of 400 l/h; the Reynolds number was 1,800.

The aerosol was formed at a temperature of 53° C.

6

The contact time in the hydrolysis chamber was 57 seconds, the ratio: moles of $H_2O$/moles of Al sec.butoxide being equal to 8.

The product so prepared was subjected to a heat treatment at $800\,^\circ C$ during a time of 4 hours.

X-ray analysis of the powder spectrum established that the product was $\gamma\text{-}Al_2O_3$ (% by weight of $H_2O$-about 3), according to standard J.C.P.D.S. No. 14-425.

By TEM analysis, the dn value was found to be 0.25 $\mu$m and the product exhibits the same granulometric and morphological characteristics as the precursor (dw/dn = 1.18).

The obtained results show that no homogeneous surface coating is obtained and that the particles are aggregated if a support other than $TiO_2$ is utilized, though it has nearly the same morphological and granulometric characteristics as titanium dioxide.

Example 10 (comparative test)

The procedure of Example 1A was repeated under the same conditions, and to the iron oxide suspension so obtained there was added 1 mg of the $TiO_2$ powder utilized in the preceding tests. The mixture of the two sols was brought to a temperature of $100\,^\circ C \pm 1\,^\circ C$ during 24 hours. The obtained result shows a heterocoagulation of the particles, i.e. a chemical mixing of the two oxides without uniform deposition of $\alpha\text{-}Fe_2O_3$ onto $TiO_2$.

Example 11

100 mg of the sample prepared according to Example 7, after washing with $H_2O$ in order to remove any residual acidity, was subjected to a reducing treatment comprising the following steps:
- heating in a $N_2$ flow (10 l/h) up to $400\,^\circ C$ (2 hours);
- reduction at a temperature of $400\,^\circ C$ during 90 minutes by means of a mixture of 5.3% by volume of $H_2$ in $N_2$ flowing through a bubbler kept at such a temperature a to obtain a molar ratio $H_2 : H_2O = 3 : 1$;
- cooling in a $N_2$ flow to room temperature.

The discharged sample appeared, under X-ray analysis, to consist of $TiO_2$ (anatase) and $Fe_3O_4$ - (magnetite). The sample, subjected to TEM analysis, exhibited the same granulometric and morphological characteristics as that of Example 7.

Magnetic characterizations carried out on the powder so obtained provided the following results:

Hci = 355 Oe;

$\sigma_s$ = 10.1 emu/g.

Example 12 (comparative test)

4.2 cc of a $FeCl_3$ solution prepared by diluting 1 cc of solution B to 250 cc with bidistilled $H_2O$ filtered on Nuclepore 0.2 $\mu$m, 2.5 cc of HCl 0.2 M and 23.3 cc of bidistilled $H_2O$ were maintained at a temperature of $100\,^\circ C \pm 1\,^\circ C$ during 24 hours in a closed and non-stirred system. After such period the suspension was filtered and the precipitate, collected from 20 identical tests, was united with 300 mg of $TiO_2$ having the granulometric characteristics indicated for the standard solution A referred to previously.

The two solid oxides were mechanically mixed in a mortar and subjected to reduction under the same conditions as indicated in Example 11. Magnetic analysis provided the following results:

Hci = 245 Oe;

$\sigma_s$ = 1.65 emu/g.

Example 12 A (comparative test)

Example 10 was repeated employing the $FeCl_3$ and HCl concentrations of Example 7; 15 mg of $TiO_2$ were added to the suspension obtained. The sample was reduced under the same conditions indicated in Example 11.

The magnetic characteristics of the resulting chemical mixture were similar to those indicated in Example 12.

Example 13

The sample of $TiO_2$ coated with $Fe_3O_4$ obtained according to Example 11 was reoxidized, under controlled conditions, to γ-Fe₂O₃.

The treatment was accomplished by heating the sample in an air flow (10 l/h) to 350°C (1 hour 30 minutes), maintaining a temperature of 350°C during 30 minutes and allowing the product to cool.

The discharged material appeared, under X-ray analysis, to consist of $TiO_2$ (anatase) and of a uniform coating layer consisting of $Fe_3O_4$ (about 30%) and γ-$Fe_2O_3$ (about 70%).

Magnetic tests provided the following results:

Hci = 220 Oe

$\sigma_s$ = 12.2 emu/g.

Examples 14 - 20

These Examples illustrate the effects of different $TiO_2$ amounts, in relation to different concentrations of $FeCl_3$.

$$T = 100°C; \quad t = 24 \text{ hours} \quad HCl = 1.7 . 10^{-2} \text{ M}$$

| | $TiO_2$ (mg/l) | | |
|---|---|---|---|
| $FeCl_3$(M) | 35 | 100 | 500 |
| $2.10^{-4}$ | – | SP | SP |
| $2.10^{-3}$ | PI | PI | SP |
| $2.10^{-2}$ | – | PI | PI |

PI = partial interaction between $TiO_2$ and $Fe_2O_3$

SP = superficial precipitation of $Fe_2O_3$ onto $TiO_2$

– = tests not carried out.

Examples 21 to 37

These examples illustrate the effects of different concentrations of HCl, in relation to different concentrations of $FeCl_3$.

35 mg/1 of $TiO_2$; T = 100°C; t = 24 hours

| $FeCl_3$(M) | HCl(M) | | | | | | | |
|---|---|---|---|---|---|---|---|---|
| | 0 | $1.10^{-4}$ | $1.10^{-3}$ | $5.10^{-3}$ | $8.10^{-3}$ | $1.10^{-2}$ | $2.10^{-2}$ | $1.10^{-1}$ |
| $2.10^{-4}$ | SI | PI | PI | SP | SP | SP | – | NP |
| $2.10^{-3}$ | SI | SI | PI | – | – | PI | PI | NP |
| $2.10^{-2}$ | SI | – | SI | – | – | SI | SI | – |

SI = stable dispersion of independent particles of $TiO_2$ and $Fe_2O_3$

PI = partial interaction between $TiO_2$ and $Fe_2O_3$

SP = superficial precipitation of $Fe_2O_3$ onto $TiO_2$

NP = no precipitation of $Fe_2O_3$

– = tests not carried out.


Example 38

Example 1 was repeated utilizing 1 cc of solution A prepared as is described in the preparation of the standard solutions, but using 1 g of $TiO_2$ in powder form having ⌀ = 0.08 μm and dw/dn = 1.19.
The $TiO_2$ was obtained according to the technique described in U.S.-A-4,241,042.
The obtained results were similar to those obtained in Example 1.


Example 39

Example 38 was repeated, using 1 cc of a solution A prepared by utilizing 1 g of $TiO_2$ in powder form having ⌀ = 0.84 μm and dw/dn = 1.15.
The $TiO_2$ was prepared according to the technique described in U.S.-A-4,242,042.
The obtained results were similar to those obtained in Example 38.


Example 40

Example 38 was repeated using a $TiO_2$ powder having ⌀ = 2.98 μm and dw/dn = 1.19, prepared according to the technique described in U.S.-A-4,241,042.
The obtained results were similar to those obtained in Example 1.


Example 41

Example 38 was repeated using 1 g of $TiO_2$, having ⌀ = 0.82 μm and dw/dn = 1.07, to prepare solution A, said $TiO_2$ being obtained according to Example 1 of European Patent Application EP-A-117,755.
The obtained results were similar to those obtained in Example 1.


Example 42

The product obtained according to Example 41 was subjected to the same oxidizing treatment indicated in Example 11.

The obtained sample exhibited characteristics similar to those indicated in Example 11.

Example 43

The product obtained according to Example 42 was subjected to the same oxidizing treatment indicated in Example 13.

The obtained results were similar to those obtained in Example 13.

**Claims**

1. Spherical non-aggregated particles, characterized by having a number average diameter of from 0.05 to 3.04 $\mu$m, a polydispersion index dw/dn less than or equal to 2.0, in which dw is the weight average diameter and dn is the number average diameter, consisting of titanium dioxide coated with a uniform layer having a thickness from 10 Å to 400 Å and consisting of $\alpha$-or $\gamma$-$Fe_2O_3$, or magnetite or mixtures thereof.

2. Spherical particles as claimed in claim 1, characterized in that the uniform layer has a thickness of from 10 Å to 300 Å.

3. Spherical particles as claimed in claim 1 or 2, characterized in that the said number average diameter is from 0.2 to 0.8 $\mu$m.

4. Spherical particles as claimed in any of claims 1 to 3, characterized in that the said polydispersion index dw/dn is less than or equal to 1.20.

5. Spherical particles as claimed in any of claims 1 to 4, characterized in that the said layer coating the titanium dioxide consists of $\alpha$-$Fe_2O_3$.

6. A process for preparing spherical particles as claimed in any of claims 1 to 4, comprising subjecting spherical particles according to claim 5 to heating at a temperature from 300 to 500 °C in a hydrogen stream to reduce $\alpha$-$Fe_2O_3$ to magnetite.

7. A process for preparing spherical particles as claimed in any of claims 1 to 4 comprising subjecting spherical particles as claimed in claim 5 to oxidation at a temperature of from 300 to 400 °C to convert magnetite to $\gamma$-$Fe_2O_3$

8. A process for preparing spherical particles according to claim 1, characterized in that an iron oxide is caused to precipitate from a solution of a Fe (III) salt onto titanium dioxide, consisting of solid, non-aggregated particles having a number average diameter of from 0.05 to 3 $\mu$m and a polydispersion index dw/dn less than or equal to 2.0, in which dw and dn are as defined in claim 1, the said particles having a spherical form, by using an amount of Fe (III) less than or equal to 40% by weight calculated on the basis of $TiO_2$, the pH value of the suspension being from greater than 1.0 to less than 2.8, and by subsequently heating the suspension to a temperature of from 80 to 100 °C and by aging the suspension at said temperature for at least 30 minutes.

9. A process as claimed in claim 8, characterized in that the said temperature is from 90 to 100 °C and the said aging time is 20 hours at said temperature.

10. A process as claimed in claim 9, characterized in that the time during which the precipitation occurs is at least 30 hours.

11. A process as claimed in any of claims 8 to 10, characterized in that the pH of the suspension is from 1.6 to 2.0.

12. A process as claimed in any of claims 8 to 11, characterized in that the said concentration of Fe (III) is less than or equal to 30% by weight calculated on the basis of titanium dioxide.

13. A process as claimed in any of claims 8 to 12, characterized in that the Fe (III) salt is selected from sulphates, nitrates, perchlorates and chlorides.

14. A process as claimed in claim 13, characterized in that the Fe (III) salt is ferric chloride.

15. A process as claimed in any of claim 8 to 14, characterized in that the pH of the suspension is obtained by adding HCl or HClO$_4$.

16. A process as claimed in any of claims 8 to 15, characterized in that titanium dioxide is treated with a heteropolyacid solution before being utilized.

17. A process as claimed in claim 16, characterized in that the heteropolyacid is selected from tungstophosphoric acid and tungstosilicic acid.

18. A process as claimed in claim 16 or 17, characterized in that the heteropolyacid concentration is from $10^{-4}$ to $10^{-5}$ moles/liter.

**Revendications**

1. Particules sphériques non agrégées, caractérisées en ce que le diamètre moyen numérique est compris entre 0,05 et 3,04 $\mu$m, l'indice de polydispersion dw/dn est inférieur ou égal à 2,0, dans lequel dw représente le diamètre moyen pondéré et dn représente le diamètre moyen numérique, constitué de dioxyde de titane revêtu d'une couche uniforme dont l'épaisseur est comprise entre 10 Å et 400 Å et constituée d'$\alpha$-Fe$_2$O$_3$ ou de $\gamma$-Fe$_2$O$_3$, ou de magnétite ou de leur mélange.

2. Particules sphériques selon la revendication 1, caractérisées en ce que l'épaisseur de la couche uniforme est comprise entre 10 Å et 300 Å.

3. Particules sphériques selon la revendication 1 ou 2, caractérisées en ce que ledit diamètre moyen numérique est compris entre 0,2 et 0,8 $\mu$m.

4. Particules sphériques selon l'une quelconque des revendications 1 à 3, caractérisées en ce que ledit indice de polydispersion dw/dn est inférieur ou égal à 1,20.

5. Particules sphériques selon l'une quelconque des revendications 1 à 4, caractérisées en ce que ladite couche de revêtement du dioxyde de titane est constituée de $\alpha$-Fe$_2$O$_3$.

6. Procédé de préparation de particules sphériques selon l'une quelconque des revendications 1 à 4, caractérisé en ce que l'on soumet des particules sphériques selon la revendication 5 à un chauffage à une température de 300 à 500°C dans un courant d'hydrogène pour transformer l'$\alpha$-Fe$_2$O$_3$ en magnétite.

7. Procédé de préparation de particules sphériques selon l'une quelconque des revendications 1 à 4, caractérisé en ce que l'on soumet des particules sphériques selon la revendication 5 à une oxydation à une température de 300 à 400°C pour convertir la magnétite en $\gamma$-Fe$_2$O$_3$.

8. Procédé de préparation de particules sphériques selon la revendication 1, caractérisé en ce que l'on occasionne la précipitation d'un oxyde de fer à partir d'une solution de sel de Fe (III) sur du dioxyde de titane, constitué de particules solides non agrégées dont le diamètre moyen numérique est compris entre 0,05 et 3 $\mu$m et l'indice de polydispersion dw/dn est inférieur ou égal à 2,0, dw et dn étant tels que définis dans la revendication 1, lesdites particules présentant une forme sphérique, par utilisation d'une quantité de Fe (III) inférieure ou égale à 40% en poids par rapport au TiO$_2$, la valeur de pH à suspension étant comprise entre une valeur supérieure à 1,0 et inférieure à 2,8, et en chauffant ensuite la suspension à une température de 80 à 100°C et en faisant vieillir la suspension à ladite température pendant au moins 30 minutes.

9. Procédé selon la revendication 8, caractérisé en ce que cette température est comprise entre 90 et 100°C et la durée de vieillissement est égale environ à 20 heures à ladite température.

**10.** Procédé selon la revendication 9, caractérisé en ce que le temps pendant lequel se produit la précipitation est au moins égal à 30 heures.

**11.** Procédé selon l'une quelconque des revendications 8 à 10, caractérisé en ce que le pH de la suspension est compris entre 1,6 et 2,0.

**12.** Procédé selon l'une quelconque des revendications 8 à 11, caractérisé en ce que cette concentration de Fe (III) est inférieure ou égale à 30% en poids par rapport au dioxyde de titane.

**13.** Procédé selon l'une quelconque des revendications 8 à 12, caractérisé en ce que le sel de Fe (III) est choisi parmi les sulfates, nitrates, perchlorates et chlorures.

**14.** Procédé selon la revendication 13, caractérisé en ce que le sel de Fe (III) est le chlorure ferrique.

**15.** Procédé selon l'une quelconque des revendications 8 à 14, caractérisé en ce que le pH de la suspension est obtenu par addition de HCl ou HClO₄.

**16.** Procédé selon l'une quelconque des revendications 8 à 15, caractérisé en ce que le dioxyde de titane est traité à l'aide d'une solution d'hétéropolyacide avant d'être utilisé.

**17.** Procédé selon la revendication 16, caractérisé en ce que l'hétéropolyacide est choisi entre l'acide tunsgtophosphorique et l'acide tungstosilicique.

**18.** Procédé selon la revendication 16 ou 17, caractérisé en ce que la concentration d'hétéropolyacide est comprise entre $10^{-4}$ et $10^{-5}$ moles/litre.

**Patentansprüche**

**1.** Kugelige, nicht aggregierte Teilchen, dadurch gekennzeichnet, daß sie ein Zahlenmittel des Durchmessers von 0,05 bis 3,04 $\mu$m, einen Polydispersionsindex dw/dn von weniger als oder gleich 2,0, in welchem dw das Gewichtsmittel des Durchmessers und dn das Zahlenmittel des Durchmessers ist, aufweisen, die aus Titandioxid bestehen und mit einer gleichmäßigen Schicht einer Dicke von 10 Å bis 400 Å beschichtet sind, die aus $\alpha$- oder $\gamma$-Fe₂O₃ oder Magnetit oder Mischungen derselben besteht.

**2.** Kugelige Teilchen gemäß Anspruch 1, dadurch gekennzeichnet, daß die gleichmäßige Schicht eine Dicke von 10 bis 300 Å aufweist.

**3.** Kugelige Teilchen gemäß Anspruch 1 oder 2, dadurch gekennzeichnet, daß das Zahlenmittel des Durchmessers 0,2 bis 0,8 $\mu$m beträgt.

**4.** Kugelige Teilchen gemäß irgendeinem der Ansprüche 1 bis 3, dadurch gekennzeichnet, daß der Polydispersionsindex dw/dn weniger als 1,20 beträgt oder gleich 1,20 ist.

**5.** Kugelige Teilchen gemäß irgendeinem der Ansprüche 1 bis 4, dadurch gekennzeichnet, daß die Schicht, die das Titandioxid überzieht, aus $\alpha$-Fe₂O₃ besteht.

**6.** Verfahren zur Herstellung kugeliger Teilchen gemäß irgendeinem der Ansprüche 1 bis 4, bei welchen kugelige Teilchen gemäß Anspruch 5 in einem Wasserstoffstrom einem Erhitzen auf eine Temperatur von 300 bis 500°C unterworfen werden, um $\alpha$-Fe₂O₃ zu Magnetit zu reduzieren.

**7.** Verfahren zur Herstellung kugeliger Teilchen gemäß irgendeinem der Ansprüche 1 bis 4, bei welchem kugelige Teilchen gemäß Anspruch 5 bei einer Temperatur von 300 bis 400°C einer Oxidation unterworfen werfen, um Magnetit in $\gamma$-Fe₂O₃ umzuwandeln.

**8.** Verfahren zur Herstellung kugeliger Teilchen gemäß Anspruch 1, dadurch gekennzeichnet, daß ein Eisenoxid aus einer Lösung eines Fe-(III)-salzes auf Titandioxid, das aus festen, nicht aggregierten Teilchen mit einem Zahlenmittel des Durchmessers von 0,05 bis 3 $\mu$m und einem Polydispersionsindex dw/dn von weniger als oder gleich 2,0, in welchem dw und dn wie in Anspruch 1 definiert sind, besteht, ausgefällt wird, wobei die Teilchen eine kugelige Form haben, indem man Fe-(III) in einer Menge von weniger als oder gleich 40 Gew.-%, berechnet auf der Grundlage von $TiO_2$ verwendet, der pH-Wert der Suspension größer als 1,0 bis kleiner als 2,8 ist und indem man man anschließend die Suspension auf eine Temperatur von 80 bis 100°C erhitzt und die Suspension bei dieser Temperatur mindestens 30 min altert.

9. Verfahren gemäß Anspruch 8, dadurch gekennzeichnet, daß die Temperatur von 90 bis 100°C beträgt und die Alterungsdauer 20 h bei dieser Temperatur beträgt.

10. Verfahren gemäß Anspruch 9, dadurch gekennzeichnet, daß die Dauer, während der die Ausfällung erfolgt, mindestens 30 h beträgt.

11. Verfahren gemäß irgendienem der Ansprüche 8 bis 10, dadurch gekennzeichnet, daß der pH-Wert der Suspension 1,6 bis 2,0 beträgt.

12. Verfahren gemäß irgendeinem der Ansprüche 8 bis 11, dadurch gekennzeichnet, daß die Konzentration von Fe-(III) weniger als oder gleich 30 Gew.-%, berechnet auf der Grundlage von Titandioxid, beträgt.

13. Verfahren gemäß irgendeinem der Ansprüche 8 bis 12, dadurch gekennzeichnet, daß das Fe-(III)-salz aus Sulfaten, Nitraten, Perchloraten und Chloriden ausgewählt ist.

14. Verfahren gemäß Anspruch 13, dadurch gekennzeichnet, daß das Fe-(III)-salz Fe-(III)-chlorid ist.

15. Verfahren gemäß irgendeinem der Ansprüche 8 bis 14, dadurch gekennzeichnet, daß der pH-Wert der Suspension durch Zugabe von HCl oder $HClO_4$ erhalten wird.

16. Verfahren gemäß irgendeinem der Ansprüche 8 bis 15, dadurch gekennzeichnet, daß Titandioxid vor der Verwendung mit einer Heteropolysäurelösung behandelt wird.

17. Verfahren gemäß Anspruch 16, dadurch gekennzeichnet, daß die Heteropolysäure aus Wolframphosphorsäure und Wolframkieselsäure ausgewählt ist.

18. Verfahren gemäß Anspruch 16 oder 17, dadurch gekennzeichnet, daß die Heteropolysäurekonzentration $10^{-4}$ bis $10^{-5}$ Mol/l beträgt.

Fig. 1

1 μm

Fig. 2

1 μm

Fig. 3

1 $\mu$m

Fig. 4

1 $\mu$m

Fig. 5

⊢━━━━┥

1 $\mu$m